# EUROPEAN PATENT APPLICATION

(11) **EP 2 063 074 A1**
(43) Date of publication of application: **27.05.2009**
(21) Application number: 08168951.5
(22) Date of filing: 12.11.2008
(51) Int. Cl.: F01L 1/18, F01L 13/00

(54) **Bearing design for a roller finger follower**

(30) Priority: 21.11.2007 US 986532
(71) Applicant: Delphi Technologies, Inc., Troy, Michigan 48007 (US)
(72) Inventor: Bauman, William Dean, Dorr, MI 49323 (US); Okenka, Michael J., Grand Rapids, MI 49501 (US); Stabel, Gerald R., Zeeland, MI 49464 (US); Stone, Albert C., Grandville, MI 49418 (US); Fogarty, Ryan D., West Henrietta, NY 14586 (US)
(74) Representative: Denton, Michael John

(57) **Abstract**

A bearing design for a roller finger follower assembly includes an outer arm (40) having a pair of openings (42), a shaft (36) extending across the outer arm through the openings, a pair of lateral follower rollers (32) mounted at opposite ends of the shaft; and a pair of bearings (38) rotatably supporting the lateral follower rollers. The shaft is not a member of the bearing. Therefore, a force acting on the rollers travels through the rollers directly into the bearing and into the outer arm which reduces the potential for the rollers to become detached from the shaft. An inboard bearing design involves an inner bearing race integrated into the rollers. An outboard bearing design involves an inner bearing race integrated in the outer arm and an outer bearing race integrated into the rollers.

## Description

### TECHNICAL FIELD

The present invention relates to mechanisms for altering the actuation of valves in internal combustion engines; more particularly, to roller finger followers used in overhead cam type internal combustion engines; and most particularly, to an improved bearing design for a roller-shaft assembly.

### BACKGROUND OF THE INVENTION

Roller finger followers (RFF) for controllably activating compression valves in a variable valve actuation train in an internal combustion engine are well known. In a typical application, the RFF serves to transfer and translate rotary motion of a cam shaft lobe into a pivotal motion of the RFF to thereby open and close an associated valve.

It is known that at times of low torque demand, valves may be opened to only a low lift position to conserve fuel, and that at times of high torque demand, valves may be opened wider to a high lift position to admit more fuel. It is known in the art to accomplish this by de-activating a portion of the valve train associated with pre-selected cylinders in any of various ways. One way is by providing a two-step RFF having an activatable/deactivatable central slider arm that is selectively movable relative to an outer body of the RFF. The central slider arm may be positioned for contact with a high lift lobe of the cam shaft. Such a two-step RFF typically is configured with rollers disposed at each side of the slider arm and connected to the outer body of the RFF for contact with low lift lobes of the cam shaft. Thus, the two-step RFF causes low lift of the associated valve when the slider arm of the RFF is in a deactivated position, and high lift of the associated valve when the slider arm of the RFF is in an activated position and coupled to the outer body of the RFF to engage the high lift lobe of the cam shaft.

A two-step RFF known in the art includes a generally elongated outer body having a pallet end in contact with an axially movable valve stem and an opposing socket end in contact with a stationary pivot such as, for example, a hydraulic lash adjuster (HLA). A moveable and therefore deactivatable high lifter slider is positioned central to the RFF body. Rollers are rotatably mounted on each side of the slider on a non-rotatable shaft connected to the body. The rollers typically ride on narrow bearings, as for example needle bearings. End washers may be used to rotatably fix the rollers and bearings to the shaft and to restrain the rollers and bearings from moving laterally on the shaft.

The width of the bearings in the background art is limited to the width of the rollers themselves. Further, because the bearings are disposed outside of the body walls, the bearings are substantially shielded from flow of lubricating oil with the RFF body.

Other known bearings in the prior art utilize a shaft having a journal that contacts and turns in a drawn cup needle or roller bearing, which extends between and through shaft orifices of the RFF body. One shortcoming of this design is that the drawn cup takes up space that could be used to increase the shaft and/or needle size or number. Increasing the shaft size would improve the strength of the shaft and the joint between the shaft and the rollers. Increasing the shaft size in combination with the needle size or number would further improve the load capacity of the bearing.

In prior art applications where the drawn cup needle or roller bearings are press fitted into shaft orifices of the RFF body production problems may occur. For example, the drawn cup bearings may become loose during operation if the bore in the RFF body is not ground precise enough. Ends of the drawn cup bearings that may extend into the high lift follower pocket of the RFF body can not be used to limit the travel of the high lift follower because they are soft in order to be rolled over to retain the needles or rollers.

Other two-step RFFs of the prior art utilize two spaced apart rollers attached to both ends of a stepped shaft for low lift mode. A major shortcoming of this design is the attachment of the rollers to the shaft. The interface must be able to withstand the severe impact from lock pin ejections. When ejections occur, the force is transmitted through the roller into the ends of the stepped shaft through the roller bearing press fitted into the RFF body and supporting the shaft and into the body. Current methods, such as clip retention, rivet retention, or stake retention, to attach the rollers to the stepped shaft have been insufficient to withstand the forces.

What is needed in the art is an improved bearing design for rotatably installing two spaced apart rollers attached to both ends of a shaft in a RFF body.

It is a principal object of the present invention to provide a bearing design that improves stiffness of the assembly and resists the forces of operation without degrading the joint between the roller and the shaft.

It is a further object of the present invention to provide a bearing design that distributes forces from the pin ejections away from the shaft.

While this invention is described in the context of a two-step deactivation RFF, it should be understood that the bearing improvements may be applied to any two-step RFF as well as to single-step RFFs.

### SUMMARY OF THE INVENTION

Briefly described, in accordance with the present invention an inboard and an outboard bearing design where a roller shaft is not a load-bearing member are disclosed. By separating the shaft from the bearing, a force acting on the rollers travels through the rollers directly into the bearing and into the outer arm of the RFF body, which reduces the potential for the rollers to become detached from the shaft.

In one embodiment of the invention rollers of a RFF have been redesigned to include an inner bearing race for a bearing, such as a roller or needle bearing. By incorporating the inner bearing race into the roller, stress from lock pin ejections are distributed over a longer roller to shaft interface, which may reduce the potential for the roller to become loose and fall off. The force from the ejection of the lock pin travels through the roller directly into the bearing and into the outer arm of the RFF body, contrary to the prior art where the lock pin ejection force travels through the roller into the soft ends of the stepped shaft and through the bearing into the outer arm. A straight shaft may be used in accordance with the first embodiment of the invention contrary to the stepped shaft used in the prior art. The straight shaft is a simpler and less costly component than a prior art stepped shaft. The straight shaft in accordance with the first embodiment of the invention is used as a component to hold the assembly together rather than being a structural component requiring strength to withstand lock pin ejection forces as in the prior art. The manufacturing cost of the shaft used in accordance with the first embodiment of the invention could be substantially reduced compared to the prior art stepped shaft. Furthermore, high stresses from an ejection event are transferred to the hard regions of the shaft and roller, which enables the roller to retain good perpendicularity to the shaft. Therefore, the ends of the shaft may be kept soft enabling the use of a variety of retention methods, such as clip retention, rivet retention, or stake retention.

In accordance with another embodiment of the invention, the RFF body or outer arm has been redesigned to include an inner bearing race for a bearing, such as a roller bearing, needle bearing, tapered roller or needle bearing, or ball bearing. By incorporating outward pointing bosses into the outer arm of an RFF assembly the bearings can be mounted outboard between the outer arm and the rollers. An outer surface of the bosses is utilized as an inner bearing race while an outer bearing race is integrated into the rollers. This design has the advantages of allowing for a maximum diameter of the shaft to improve strength of the shaft/roller joint and to reduce flexing of the shaft during engine operation. A larger shaft diameter also offers more options for attachment of the rollers to the shaft. The outboard bearing design in accordance with the embodiment of the invention improves stiffness of the shaft/roller assembly and resists forces of RFF operation without degrading the joint between the roller and the shaft. Furthermore, the outboard design allows for the largest possible bearings to carry the maximum loads and also assists centering the rollers, thereby reducing run out of the rollers, axial and face. The hardened center of the shaft can further be used a z-stop for the inner arm of the RFF assembly, since the bearings don't take up space inside the outer arm as in the prior art. The outboard bearing design still further eliminates the need to grind the inside diameter of the outer arm and the shaft does not need to be precision ground since the shaft in accordance with one embodiment of the invention is strictly used as a fastener and not as actual bearing member as in the prior art. Caged bearings may be used with the outboard bearing design in accordance with one embodiment of the present invention, which may improve assembly operation and may eliminate the need for a press fit bearing design.

### BRIEF DESCRIPTION OF THE DRAWINGS

These and other features and advantages of the invention will be more fully understood and appreciated from the following description of certain exemplary embodiments of the invention taken together with the accompanying drawings, in which:
FIG. 1 is an exploded isometric view of a prior art two-step roller finger follower assembly;
FIG. 2 is an elevational cross-sectional view of a first roller-shaft assembly in accordance with a first embodiment of the invention, showing an inboard bearing design;
FIG. 3 is an elevational cross-sectional view of the first roller-shaft assembly in accordance with the first embodiment of the invention, showing an alternate inboard bearing design;
FIG. 4 is a partial isometric cross-sectional view of a second roller-shaft assembly in accordance with a second embodiment of the invention, showing an outboard bearing design;
FIG. 5 is a partial isometric view of a roller finger follower in accordance with the second embodiment of the invention, showing the outboard bearing design; and
FIG. 6 is a partial isometric cross-sectional view of the second roller-shaft assembly in accordance with the second embodiment of the invention, showing an alternate outboard bearing design.

Corresponding reference characters indicate corresponding parts throughout the several views. The exemplification set out herein illustrates preferred embodiments of the invention, in one form, and such exemplification is not to be construed as limiting the scope of the invention in any manner.

### DESCRIPTION OF THE PREFERRED EMBODIMENTS

The advantages and benefits afforded to a two-step roller finger follower (RFF) in accordance with the invention may be better appreciated by first considering a prior art two-step roller finger follower. Such a two-step RFF is suitable for use in a variable valve activation system of an internal combustion engine. While this invention is described in the context of a two-step deactivation RFF, it should be understood that the bearing improvements may be applied to any two-step RFF as well as to single-step RFFs.

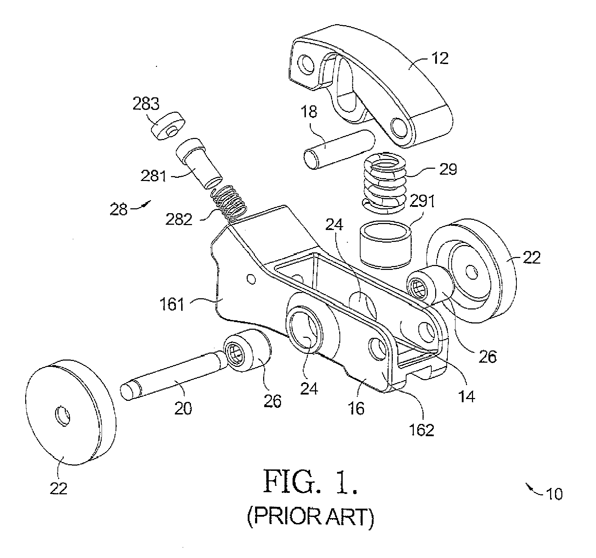

Referring to FIG. 1, a prior art two step roller finger follower (RFF) assembly 10 includes an inner arm 12 disposed in a central opening 14 of an outer arm 16 of the body of the RFF. Inner arm 12 pivots within opening 14 about a pivot shaft 18. A roller shaft 20 mounted in outer arm 16 supports a pair of rollers 22 for following a low lift lobe of an engine camshaft (not shown). Roller shaft 20 is typically a stepped shaft. Rollers 22 are mounted at opposite ends of shaft 20. Outer arm 16 includes openings 24 for receiving bearings 26 for rotatably supporting shaft 20. Bearings 26 may be, for example, drawn cup needle bearings that are press fit into openings 24 and may extend into central opening 14.

Outer arm 16 has a first end 161 and a second end 162. First end 161 may be adapted for pivotably mounting RFF 10 on a hydraulic lash adjuster (HLA) (not shown). Second end 162 may be adapted for actuating a valve stem (not shown). A latching mechanism 28 disposed in outer body 16 at the first end 161 thereof selectively latches inner arm 12 in position to actuate the valve stem in response to the high-lift cam lobe base circle and eccentric, or selectively unlatches inner arm 12 to follow the high-lift cam lobe base circle and eccentric in lost motion. Latching mechanism 28 may include a piston 281, such as a lock pin, and a return spring 282 biasing the piston outwards. A plug 283 retains the outward motion of piston 281. A lost motion spring 29 is disposed in a spring cup 291 between outer arm 16 and inner arm 12 proximate to the second end 162. Ejection of piston 281 creates a force that travels through the rollers 22 into the ends of shaft 20 through bearing 26 into outer arm 16. This force may cause rollers 22 to loosen from shaft 20.

All of these relationships are known in the RFF prior art and need not to be further elaborated here.

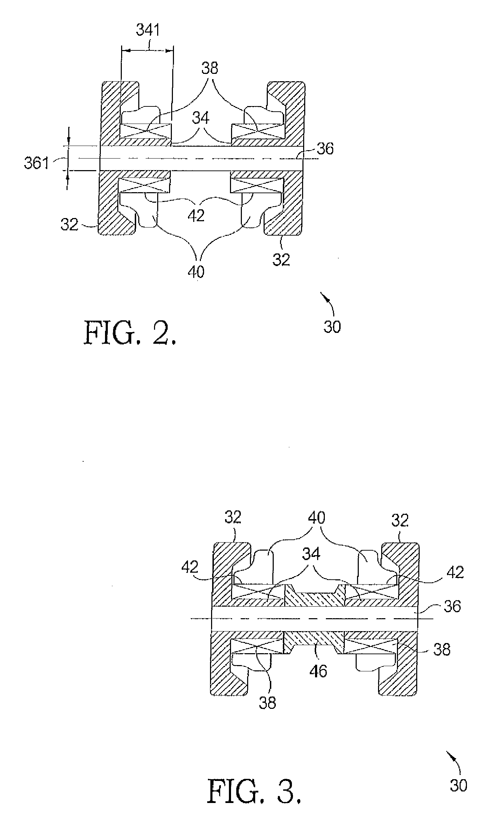

Referring now to FIG. 2, an inboard bearing design is illustrated. A first roller-shaft assembly 30 in accordance with a first embodiment of the invention includes a pair of rollers 32 with an integral inner bearing race 34, a roller shaft 36, and a pair of bearings 38. Roller-shaft assembly 30 may be part of a single-step or two-step roller finger follower assembly, such as RFF assembly 10 as shown in FIG. 1. An outer arm 40 of an RFF assembly includes a pair of openings 42 for receiving bearings 38 and shaft 36. Openings 42 may be configured as outer races for bearings 38 or may receive drawn cup bearings. Bearings 38 may be, for example, roller bearings or needle bearings, such as loose needle or drawn cup needle bearings. Bearings 38 rotatably support inner bearing race 34 and, therefore, permitting rollers 32 to follow lateral cam lobes (not shown). Rollers 32 are lateral follower rollers mounted at opposite ends of roller shaft 36. Rollers 32 may be secured to shaft 36 by using retention methods such as clip retention, rivet retention, or stake retention.

Shaft 36 may be a straight shaft having a uniform diameter 361. Shaft 36 is hardened and may include non-hardened soft areas proximate to both ends enabling rivet or staking retention of the rollers on the shaft. Shaft 36 is designed to hold roller-shaft assembly 30 together rather than being a structural component of assembly 30, such as a bearing member.

Integral bearing race 34 of roller 32 extends axially through opening 42 into a central opening, such as central opening 14 shown in FIG.1, of outer arm 40 for a length 341. The length 341 of bearing race 34 is larger than the diameter of shaft 36 enabling distribution of stress, for example, from ejections of a piston of a latching mechanism, such as piston 281 of latching mechanism 28 as shown in FIG. 1, away from shaft 36. A force acting on the rollers 32, such as a force from ejection the piston, travels through rollers 32 directly into bearing 38 and into outer arm 40. The outer diameter of inner bearing race 34 must be precision ground for receiving bearing 38, while the inner diameter of roller 32 might not be precision ground since a press fit connection with shaft 36 may not be required.

As illustrated in FIG. 3, a sleeve 46 may be positioned around shaft 36 and between bearing races 34 and bearings 38. Sleeve 46 is used as a spacer and assists in positioning rollers 32 and bearings 38 on shaft 36.

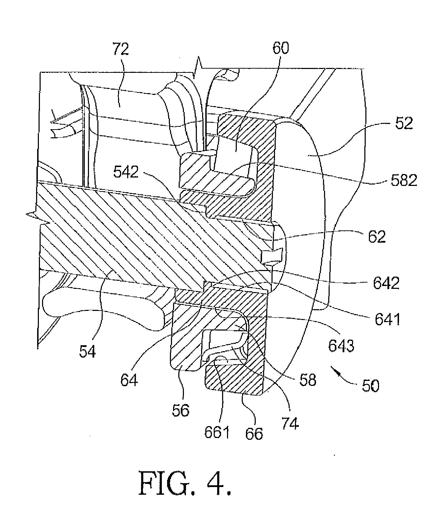

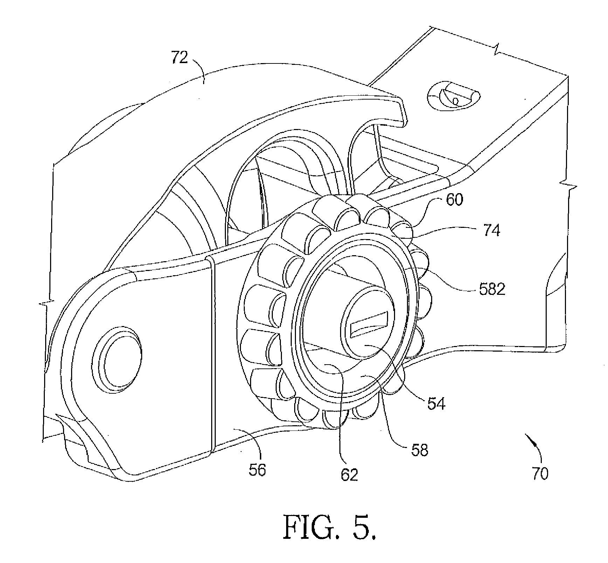

Referring to FIGS. 4 and 5, an outboard bearing design of a roller finger follower 70 is illustrated. A second roller-shaft assembly 50 in accordance with a second embodiment of the invention includes a pair of lateral follower rollers 52 mounted on opposite ends of a roller shaft 54 and a pair of bearings 60 rotatably supporting rollers 52. An outer arm 56 of roller finger follower 70 includes a pair of outward extending bosses 58 that have cylindrical openings 62 for receiving rollers 52 and shaft 54. Roller-shaft assembly 50 is shown in FIG. 5 without rollers 52 installed. Roller-shaft assembly 50 may be part of a single-step or two-step roller finger follower assembly, such as RFF assembly 10 as shown in FIG. 1.

Shaft 54 is a cross-shaft that extends horizontally through outer arm 56. In a preferred embodiment, shaft 54 is a stepped shaft including step 542. In an alternative embodiment, shaft 54 may be designed as a straight shaft. Shaft 54 may be hardened except for the end-portions following step 542. Shaft 54 is designed as a fastener that holds roller-shaft assembly 50 together. Since shaft 54 is not an actual bearing member, shaft 54 does not need to be precision ground.

Rollers 52 include an inner wall 64 and an outer wall 66. The inner perimeter 641 of inner wall 64 is adapted for mating with shaft 54. Inner perimeter 641 of inner wall 64 may include a shoulder 642 that stops against step 542 of shaft 54. Outer perimeter 643 of inner wall 64 is adapted for mating with opening 62 of outer arm 56. An inner perimeter 661 of outer wall 66 is designed as an outer bearing race for bearing 60. Rollers 52 may be attached to shaft 54 using a variety of retention methods, such as clip retention, rivet retention, and stake retention.

Each boss 58 of outer arm 56 has an outer perimeter 582 that is adapted for receiving a bearing 60. Outer perimeter 582 of bosses 58 is designed as an inner bearing race for bearing 60. Bearings 60 rotatably support rollers 52 permitting rollers 52 to follow lateral cam lobes (not shown). The surface of openings 62 does not need to be precision ground since it does not carry bearing 60. Since bosses 58 extend outward from outer arm 56, bearings 60 are positioned outboard between outer arm 56 and rollers 52. Mounting bearings 60 outboard assists in centering rollers 52 and may reduce run out of rollers 52, axial and face.

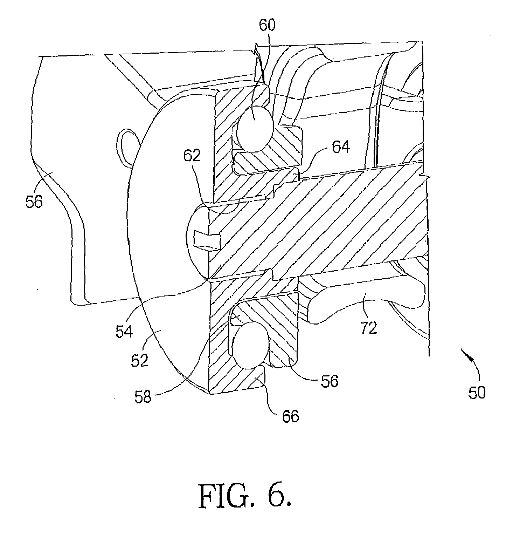

In a preferred embodiment, bearing 60 may be a tapered roller bearing or a tapered needle bearing. In an alternate embodiment, it may be possible, to use straight roller or needle bearings. Since bearing 60 is housed by between the rollers 52 and the bosses 58 of outer arm 56, bearing 60 may be a caged bearing as shown in FIGS. 4 and 5, where the rollers or needles of the bearing are positioned in a cage 74. A caged bearing simplifies the assembly process of roller-shaft assembly 50. As illustrated in FIG. 6, bearing 60 may also be a ball bearing.

The outboard bearing design as illustrated in FIGS. 4 to 6, allows for a maximum diameter of shaft 54, which improves the strength of roller-shaft assembly 50 and reduces flexing of shaft 54 during engine operation. The force from ejection a piston of a latching mechanism of a RFF, such as piston 281 shown in FIG.1, travels through rollers 52 directly into bearing 60 and into outer arm 56. The outboard bearing design as illustrated in FIGS. 4 to 6 also enables the use of the largest possible bearing 60 to carry a maximum load. The hardened center of shaft 54 can be used as a travel stop for an inner arm 72 shown in FIG. 5, restricting motion of inner arm in a vertical direction.

By providing an inboard and outboard bearing design in accordance with first and second embodiments of the invention, distribution of stress, for example, from ejections of a piston of a latching mechanism, such as piston 281 of latching mechanism 28 as shown in FIG. 1, away from shaft 36 and 54, respectively, is enabled. A force acting on rollers 32 or 52 travels through rollers 32 or 52 directly into bearing 36 or 60 and into outer arm 40 or 56, which reduces the potential for rollers 32 or 52 to become detached from shaft 36 or 54. In both embodiments, the first roller-shaft assembly 30 and the second roller shaft assembly 50, the shaft 36 and 54, respectively, is utilized as a fastener to hold the assemblies together and not as an actual bearing member.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A bearing assembly for a roller finger follower assembly, comprising:
an outer arm (40) including a pair of axially aligned openings (42);
a shaft (36) extending through said openings;
a pair of lateral follower rollers (32) mounted at opposite ends of said shaft; and
a pair of bearings (38) rotatably supporting said lateral follower rollers and mounted between said rollers and said outer arm such that a force acting on said rollers travels through said rollers directly into said bearings and into said outer arm.

2. The bearing assembly of Claim 1, wherein said rollers (32) include an inner bearing race (34).

3. The bearing assembly of Claim 2, wherein said bearings (38) are positioned between said inner bearing race (34) and said outer arm (40) within said openings (42).

4. The bearing assembly of Claim 2, further including a sleeve (46) surrounding said shaft (36) and positioned between said inner bearing races (34) of said rollers (32).

5. The bearing assembly of Claim 4 wherein said sleeve (46) is positioned between said pair of bearings (38).

6. The bearing assembly of Claim 1, wherein said outer arm (56) includes a pair of axially outwards extending bosses (58) including said openings (62), wherein an outer perimeter (582) of said bosses is an inner bearing race.

7. The bearing assembly of Claim 1, wherein said rollers (52) include an outer bearing race (661).

8. The bearing assembly of Claim 1, wherein said bearings (60) are positioned outboard between said outer arm (56) and said rollers (52).

9. The roller shaft assembly of Claim 11, wherein said first and said second bearings are drawn cup roller, or needle bearings, or tapered roller bearings, or tapered needle bearings.

10. The bearing assembly of Claim 1, wherein said rollers (32) are mounted to said shaft (36) using clip retention, rivet retention, or stake retention.

11. A roller-shaft assembly for a roller finger follower of an internal combustion engine, comprising:
an outer arm including openings;
a roller shaft extending through said openings;
a first and a second lateral follower rollers mounted at opposite ends of said roller shaft, said rollers including an inner bearing race; and
a first and a second bearing positioned between said inner bearing race of each of said first and second lateral follower rollers and said outer arm within said openings and rotatably supporting said inner bearing race; wherein said inner bearing race is positioned between said shaft and said bearing.

12. The roller shaft assembly of Claim 11, further comprising a sleeve surrounding said shaft and positioned between said inner bearing races and said first and said second bearings.

13. A roller-shaft assembly for a roller finger follower of an internal combustion engine, comprising:
an outer arm including a pair of outward extending bosses having openings, wherein an outer perimeter of said bosses is an inner bearing race;
a shaft extending through said openings;
a pair of follower rollers mounted at opposite ends of said roller shaft, each of said rollers including an outer bearing race; and
a pair of bearings positioned between said inner bearing race and said outer bearing race.

14. The roller shaft assembly of Claim 13, wherein said rollers include an inner wall and an outer wall, wherein an inner perimeter of said outer wall is said outer bearing race, wherein an outer perimeter of said inner wall is adapted for mating with said opening, and wherein an inner perimeter of said inner wall is adapted for mating with said shaft.
